# EUROPÄISCHE PATENTSCHRIFT

(11) **EP 3 582 983 B1**
(45) Veröffentlichungstag und Bekanntmachung des Hinweises auf die Patenterteilung: **10.03.2021**
(21) Anmeldenummer: 18701123.4
(22) Anmeldetag: 10.01.2018
(51) Int. Cl.: B60G 11/16, B60G 15/06, B60G 17/015, F16H 49/00

(54) **STÜTZLAGER EINER FAHRZEUG-TRAGFEDER**
SUPPORT BEARING OF A VEHICLE SUSPENSION SPRING
PALIER D'APPUI D'UN RESSORT DE SUSPENSION DE VÉHICULE

(30) Priorität: 16.02.2017 DE 102017202541
(43) Veröffentlichungstag der Anmeldung: 25.12.2019
(73) Patentinhaber: Bayerische Motoren Werke Aktiengesellschaft, 80809 München (DE)
(72) Erfinder: DURKOVIC, Martin, 81929 München (DE)
(86) Internationale Anmeldenummer: PCT/EP2018/050552
(87) Internationale Veröffentlichungsnummer: WO 2018/149560

(56) Entgegenhaltungen:
- EP-A2- 1 927 486
- DE-A1-102004 004 335
- DE-A1-102011 101 350
- US-A- 5 553 836
- US-A1- 2013 020 748

## Beschreibung

Die Erfindung betrifft ein Stützlager für eine Tragfeder zwischen einem Aufbau eines Fahrzeugs und einem Radführungselement des Fahrzeugs mit zumindest zwei mittels eines Aktuators relativ zueinander zumindest annährend in Fahrzeug-Hochachsrichtung verlagerbaren Lagerteilen, von denen ein erstes Lagerteil am Fahrzeug-Aufbau befestigt ist und das zweite Lagerteil eine Abstützung für die Tragfeder bildet. Zum Stand der Technik wird auf die WO 2010/055098 A1 und die DE 10 2009 027 715 A1, sowie die US 2013/020748 A1 verwiesen US 2013/020748 insbesondere offenbart ein Stützlager nach dem Oberbegriff des Anspruchs 1.

Es kann gewünscht sein, den Aufbau eines bspw. zweispurigen Kraftfahrzeugs gegenüber der Fahrbahn und somit auch gegenüber dessen Rädern gezielt anheben oder absenken zu können, weshalb bereits verschiedene Ausführungsformen insbesondere zur im wesentlichen vertikalen, d.h. in Fzg.-Hochachsrichtung ausgerichteten Verlagerung eines Federfußpunktes einer insbesondere als übliche Stahl-Wendelfeder ausgebildeten Tragfeder zwischen einem Radführungselement des Fahrzeugs (wie einem Radträger oder einem radführenden Lenker) und dem Fzg.-Aufbau im Bereich des jeweiligen Rades vorgeschlagen wurden. Neben hydraulischen Einrichtungen (wie bspw. der sog. Active-Body-Control von Mercedes-Benz) oder pneumatischen Einrichtungen sind hierfür auch elektromechanische Spindeltriebe bekannt geworden. Besonders kompakt bauend kann eine solche Verlagerungs- oder Verstellvorrichtung dabei in einem sog. Stützlager integriert sein, in welchem üblicherweise auch das einem Radführungselement abgewandte Ende eines Schwingungsdämpfers eines Dämpfer-Federbeins am Fahrzeug-Aufbau gelagert ist, wobei zwei im wesentlichen in Fzg.-Hochsachrichtung gegeneinander verlagerbare Lagerteile (des Stützlagers) vorgesehen sind.

Hiermit soll nun eine wirkungsvolle und besonders kompakt bauende Anordnung einer solchen Verstellvorrichtung bzw. ein entsprechendes Stützlager nach dem Oberbegriff des Anspruchs 1 aufgezeigt werden (= Aufgabe der vorliegenden Erfindung).

Die Lösung dieser Aufgabe ist dadurch gekennzeichnet, dass der Aktuator durch einen Elektromotor mit nachgeschaltetem Spannungswellengetriebe oder Zykloidgetriebe gebildet ist, welcher die nach Art einer Gewindespindel aufeinander abgestützten Lagerteile relativ zueinander zu verdrehen vermag. Vorteilhafte Aus- und Weiterbildungen sind Inhalt der Unteransprüche.

Die erfindungsgemäß vorgeschlagenen Getriebe gestatten aufgrund ihres hohen Übersetzungsverhältnisses die Verwendung eines klein bauenden und relativ schnell drehenden Elektromotors als Stellmotor zum Verlagern der beiden Lagerteile und somit zum hohe Kräfte erfordernden anteiligen Anheben des schweren Fahrzeug-Aufbaus entgegen der Schwerkraft. Dabei zeichnen sich diese Getriebe und insbesondere ein Spannungswellengetriebe durch sehr geringen Bauraumbedarf aus. Damit ist es sogar möglich, auf einen (bekanntlich einen hohen Wirkungsgrad und somit nur geringe Reibungsverluste aufweisenden) für einen ähnlichen Anwendungsfall bekannten Kugelgewindetrieb zwischen den beiden Lagerteilen zu verzichten, so dass beispielsweise ein einfaches Gewinde mit Dreieckquerschnitt oder ein Trapezgewinde zwischen den beiden Lagerteilen eines erfindungsgemäßen Stützlagers vorgesehen werden kann, um aus einer Verdrehbegwegung der beiden Lagerteile gegeneinander auch eine Relativ-Verlagerung in Vertikalrichtung zu erzielen. Dementsprechend kann das fest mit der Fahrzeug-Aufbau verbundene erste Lagerteil einen Zylinderabschnitt mit Außengewinde mit in Richtung der Zylinderachse weisender Gewindesteigung aufweisen, mit welchem Außengewinde ein auf einem Hohlzylinderabschnitt des anderen zweiten Lagerteils vorgesehenes Innengewinde kämmt.

Bei einer solchen Ausgestaltung handelt es sich aber nur um eine von mehreren möglichen Gestaltungen - bspw. bspw. kann die Anordnung der Gewinde auf den beiden Lagerteilen auch umgekehrt vorgesehen sein.

Eine besonders kompakte und zur Übertragung der Kräfte und Bewegungen vorteilhafte Anordnung ergibt sich mit einer von der üblichen Bauweise abweichenden Ausführungsform eines (bspw. unter der Bezeichnung "Harmonic Drive" bekannten) Spannungswellengetriebes (als Bestandteil eines erfindungsgemäßen Aktuators), welche im folgenden beschrieben wird und die weiterhin unter die Bezeichnung "Spannungswellengetriebe" fallen soll:
Demnach ist eine verformbare Getriebebüchse des Spannungswellengetriebes als sog. flexspline formschlüssig und in der Verlagerungsrichtung der beiden Lagerteile oder deren genannter (gemeinsamen) Zylinderachse gegeneinander verlagerbar mit dem die Tragfeder-Abstützung bildenden zweiten Lagerteil verbunden. Diese Getriebebüchse weist in einem außenseitig mit einem hohlzylindrischen und um eine oder die (genannte) Zylinderachse rotierenden Rotor des Elektromotors zusammenwirkenden Abschnitt eine Innenverzahnung auf, welche mit einer auf einem die gleiche Zylinderachse besitzenden Kreiszylinderabschnitt des fest mit dem Fahrzeug-Aufbau verbundenen ersten Lagerteils vorgesehenen Außenverzahnung in Eingriff kommen kann. Der Rotor des Elektromotors ist hohlzylindrisch ausgebildet und besitzt in Achsrichtung der besagten Zylinderachse betrachtet innenseitig einen ovalen Querschnitt (d.h. die ovale "hohle" Querschnittsfläche steht senkrecht auf der Zylinderachse), und auf dieser diesen ovalen Querschnitt umgebenden Wand des Rotors wälzt die verformbare Getriebebüchse bei Rotation des Rotors ab, so dass sich die Getriebebüchse beim Abwälzen entsprechend verformt, wenn oder wo sie durch den Rotor mit ihrer innenseitigen Verzahnung gegen oder zwischen die Zähne der Außenverzahnung des ersten Lagerteils gepresst wird.

Dabei kann (aber muss nicht) zwischen der Innenseite oder Innenwand des Rotors und der Außenseite oder Außenwand der verformbaren Getriebebüchse ein geeignetes Lager, bspw. als Gleitlager oder vorzugsweise als Wälzlager ausgebildet, vorgesehen sein. Wegen des geringen Bauraumbedarfs wird ein Nadellager bevorzugt. Im übrigen ist der hohlzylindrische Rotor des Elektromotors außenseitig in Achsrichtung der besagten Zylinderachse betrachtet kreiszylindrisch geformt, um wie üblich mit einem entsprechenden Stator zusammen wirken zu können. Vorzugsweise kann in der Außenseite des Rotors eine Magnetstruktur zur Erzeugung des Antriebsmoments im Zusammenwirken mit dem eine geeignete Wicklung tragenden Stator des Elektromotors integriert sein.

Im Hinblick auf eine kompakte Gestaltung weiterhin vorteilhaft ist es, wenn der mit dem Rotor zusammenwirkende Stator des Elektromotors im ersten Lagerteil angeordnet, d.h. darin geeignet gelagert ist. Weiterhin kann im Sinne einer geschützten Anordnung der Stator des Elektromotors den Rotor nach Art eines Hohlzylinders umgeben; alternativ ist es jedoch auch möglich, dass der Stator in Richtung der bereits mehrfach genannten Zylinderachse betrachtet neben dem Rotor vorgesehen ist.

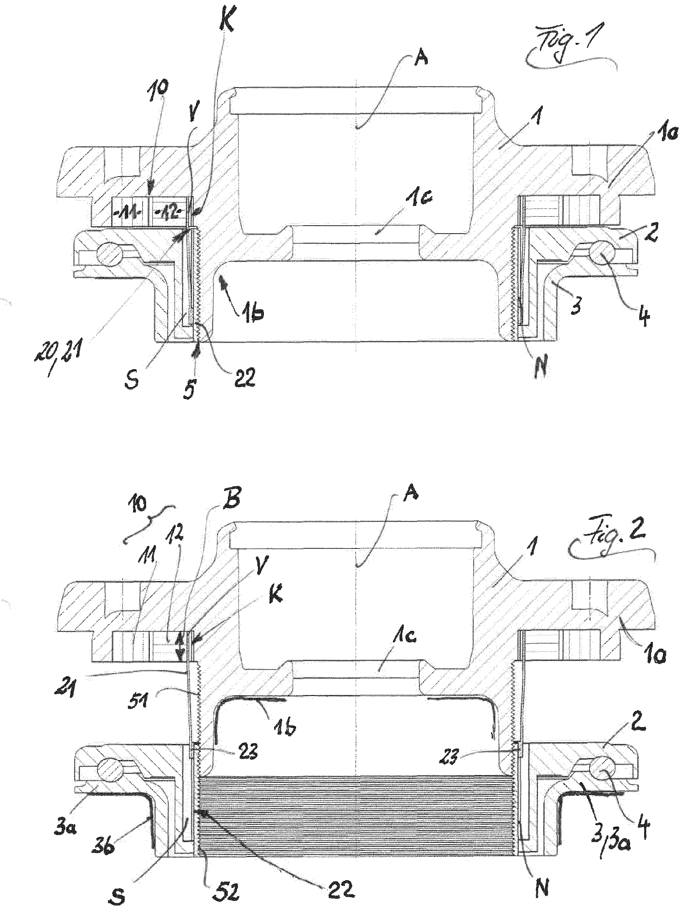

Ein Ausführungsbeispiel der Erfindung zeigen auf das Wesentliche abstrahiert die beigefügten Figuren, wobei in den beiden Figuren 1, 2 jeweils ein Längsschnitt durch ein erfindungsgemäßes Stützlager in Einbaulage in einem Fahrzeug dargestellt ist und wobei Fig.1 den "eingefahrenen" Zustand, d.h. mit gegenüber einem (nicht gezeigten) Radführungselement abgesenktem Fahrzeug-Aufbau zeigt, während in Fig.2 der angehobene Zustand, d.h. mit gegenüber einem (in den Figuren tiefer unten liegenden) Radführungselement (nach oben) angehobenem Fahrzeug-Aufbau dargestellt ist.

Das gezeigte Stützlager besteht aus einem wesentlichen ersten Lagerteil 1 und einem gegenüber diesem verlagerbaren wesentlichen zweiten Lagerteil 2 sowie hier einem fakultativen dritten Lagerteil 3. Bei allen diesen Lagerteilen handelt es sich um annährend hohlzylindrisch ausgebildete Bauteile, welche eine gemeinsame Zylinderachse A besitzen. Das in den Figuren obere erste Lagerteil 1 ist starr mit dem Aufbau bzw. der Karosserie des Fahrzeugs verbunden. An einem Bund 3a des in den Figuren unteren dritten Lagerteils 3 ist das (im Einbauzustand im Fahrzeug) obere Ende einer nicht gezeigten (und vorzugsweise als Stahl-Wendelfeder ausgebildeten) Tragfeder unter Zwischenlage einer Federunterlage 3b abgestützt, welche mit ihrem gegenüberliegenden unteren Ende an einem Radführungselement, d.h. bspw. auf einem radführenden Lenker oder an einem Radträger des Fahrzeugs bzw. desjenigen Rades des Fahrzeugs, welchem diese besagte Tragfeder zugeordnet ist, abgestützt ist. Seinerseits ist das dritte Lagerteil 3 unter Zwischenlage eines Axiallagers 4 in Vertikalrichtung, d.h. in Richtung der genannten Zylinderachse A betrachtet um diese verdrehbar an der (jedenfalls im Zustand nach Fig.2 dem ersten Lagerteil 1 gegenüber liegenden) Unterseite des zweiten Lagerteils 2 abgestützt. Damit fungiert nicht nur das dritte Lagerteil 3, sondern auch das zweite Lagerteil 2 als ein Abstützelement für die (nicht gezeigte) Tragfeder, wobei die Funktion des dritten Lagerteils 3 darin besteht, eine Verdrehung des zweiten Lagerteils 2 um die Zylinderachse A zu ermöglichen, ohne dass dabei auch die Tragfeder um diese Zylinderachse A verdreht wird oder verdreht werden muss.

Es sind nämlich das erste und das zweite Lagerteil 1, 2 gegeneinander verdrehbar und hierfür über ein Gewinde 5 bzw. nach Art einer Gewindespindel (hierfür wird ebenfalls die Bezugsziffer 5 verwendet) aufeinander abgestützt, wobei das fest mit dem Fahrzeug-Aufbau verbundene erste Lagerteil 1 einen Zylinderabschnitt mit Außengewinde 51 mit in Richtung der Zylinderachse A weisender Gewindesteigung aufweist, mit welchem Außengewinde 51 ein auf einem Hohlzylinderabschnitt des anderen zweiten Lagerteils 2 vorgesehenes Innengewinde 52 kämmt, wie besonders deutlich aus Fig.2 hervorgeht. Dabei ist das Innengewinde 52 hier auf einer separaten (ebenfalls bezüglich der Zylinderachse A kreiszylindrischen) Hülse 22 vorgesehen, welche in ihrem unteren Endbereich auf nicht dargestellte Weise fest (bspw. stoffschlüssig) mit dem zweiten Lagerteil 2 verbunden und somit ein Bestandteil desselben ist. Dabei ist oberhalb dieser genannten festen (bspw. stoffschlüssigen) Verbindung ein im wesentlichen kreiszylindrischer Ringspalt S zwischen der Hülse 22 und der restlichen Struktur des zweiten Lagerteils 2 vorgesehen, auf dessen Funktion an späterer Stelle noch eingegangen wird. Aufgrund des Gewindes 5 entfernt sich somit durch Verdrehen des zweiten Lagerteils 2 gegenüber dem ersten Lagerteil 1 um die Zylinderachse A ausgehend von der Darstellung nach Fig.1 bei geeignetem Drehsinn das zweite Lagerteil 2 längs der Zylinderachse A nach unten vom ersten Lagerteil 1. Mit umgekehrtem Drehsinn wird dann ausgehend vom Zustand nach Fig.2 das zweite Lagerteil 2 durch Verdrehen um die Zylinderachse A zurück in die Position nach Fig.1 zum ersten Lagerteil 1 hin bewegt. Um nun eine solche Verlagerung des zweiten Lagerteils 2 gegenüber dem ersten Lagerteil 1 in Vertikalrichtung bzw. im Einbauzustand im wesentlichen (oder zumindest annähernd) in Fzg.-Hochachsrichtung zu erzielen, ist ein geeigneter Aktuator vorgesehen, welcher aus einem Elektromotor 10 und einem diesem nachgeschalteten Spannungswellengetriebe 20 besteht.

Der Elektromotor 10 weist wie üblich einen Stator 11 und einen Rotor 12 auf, welche beide in einem von einer hohlzylindrischen Grundstruktur abragenden Bund 1a des ersten Lagerteils 1 solchermaßen angeordnet sind, dass zumindest der Rotor 12 dem zweiten Lagerteil 2 zugewandt sind. Selbstverständlich ist der Rotor 12 drehbar im Lagerteil 1 bzw. in dessen Bund 1a gelagert, während der Stator 11 fest bzw. starr im Lagerteil 1 bzw. in dessen Bund 1a gelagert ist. Diese beiden Elemente (11, 12) des Elektromotors 10 sind jeweils als relativ flach bauende ebenfalls hohlzylindrische Strukturen ausgebildet, wobei der Stator 11 ringförmig den Rotor 12 umgibt.

Ein wesentlicher Bestandteil des Spannungswellengetriebes 20 ist eine gemeinhin als "flexspline" bezeichnete verformbare Getriebebüchse 21, welche im Hinblick auf die gewünschte Verformbarkeit relativ dünnwandig und dabei ebenfalls näherungsweise hohlzylindrisch bezüglich der bereits mehrfach genannten Zylinderachse A ausgebildet ist. In einem Abschnitt B, der sich nur über einen im Einbauzustand oberen Teil ihrer sich in Richtung der Zylinderachse A erstreckenden Länge erstreckt, ist diese Getriebebüchse 21 innenseitig, d.h. auf ihrer der Zylinderachse A zugewandten Seite (und somit an ihrem Innenumfang) mit einer Verzahnung V versehen, wobei die Spitzen der in Umfangsrichtung nebeneinander liegenden Zähne zur Zylinderachse A hin weisen. Diese Verzahnung V bzw. diese Zähne können mit Zähnen in Eingriff kommen, welche auf einem Kreiszylinderabschnitt K des ersten Lagerteils 1 vorgesehen sind, welcher Kreiszylinderabschnitt K in Zylinderachsrichtung A betrachtet auf der gleichen Höhe wie der mit der Verzahnung V versehene Abschnitt B der Getriebebüchse 21 liegt. Dabei weisen die Zahnspitzen am Kreiszylinderabschnitt K von der Zylinderachse A weg und es stellen sich die einzelnen Zähne bei Betrachtung in Richtung der Zylinderachse A als Dreiecke oder Trapeze dar.

Wie es für Spannungswellengetriebe allgemein bekannt ist, kommt eine bzw. die Verzahnung V der verformbaren Getriebebüchse 21 lediglich abschnittsweise und aufeinanderfolgend jeweils nur mit wenigen Zähnen der kreisförmig auf dem Kreiszylinderabschnitt K vorgesehenen Zähne des ersten Lagerteils 1 in Kontakt, indem die Getriebebüchse 21 durch einen rotierenden Körper, welcher einen ovalförmigen Querschnitt besitzt, alternierend bzw. quasi umlaufend an den Kreiszylinderabschnitt K angepresst wird. Indem mit dem "umlaufenden" Oval der Kontaktbereich oder Zahneingriffs-Bereich zwischen der Getriebebüchse 21 und dem Kreiszylinderabschnitt K des ersten Lagerteils 1 "wandert", wird die Getriebebüchse 21 somit in eine Drehbewegung um ihre Achse, bei welcher es sich im wesentlichen um die gemeinsame Zylinderachse A handelt, versetzt. Als rotierender Körper mit ovalem Querschnitt fungiert vorliegend der Rotor 12 des Elektromotors 10, indem der freie Innenquerschnitt dieses wie bereits ausgeführt im wesentlichen hohlzylindrischen Rotors 12 in Achsrichtung A betrachtet von ovaler Form ist. Mit Rotation des Rotors 12 um die Achse A wird somit die Getriebebüchse 21 mit ihrer Innen-Verzahnung V quasi umlaufend und somit nacheinander jeweils nur mit wenigen Zähnen mit wenigen Zähnen auf dem Kreiszylinderabschnitt K des ersten Lagerteils 1 in Eingriff gebracht, wodurch die Getriebebüchse 21 in eine Drehbewegung um die (gemeinsame) Zylinderachse A versetzt wird. Selbstverständlich muss hierfür (wie bei Spannungswellengetrieben üblich) ein gewisses radiales Spiel (bezüglich der Zylinderachse A) zwischen der Getriebebüchse 21 bzw. deren Verzahnung V und den Zähnen auf dem Kreiszylinderabschnitt K des ersten Lagerteils 1 vorliegen und es müssen die Zähnezahlen der Verzahnung V (auf der Getriebebüchse 21) und derjenigen auf dem Kreiszylinderabschnitt K des ersten Lagerteils 1 unterschiedlich sein. Ferner ist bei Spannungswellengerieben üblicherweise zwischen dem einen ovalen Querschnitt aufweisendem Rotor und der flexiblen Getriebebüchse eine Wälzlager vorgesehen. Wenngleich dies figürlich nicht dargestellt ist, ist vorzugsweise auch hier ein als Nadellager ausgebildetes Wälzlager mit mit ihren Achsen parallel zur Zylinderachse A ausgerichteten Nadeln zwischen der Innenseite oder Innenwand des Rotors 12 und der Außenseite oder Außenwand der Getriebebüchse 21 (in demjenigen Bereich B, in welche diese Elemente miteinander zusammenwirken) vorgesehen.

Soweit wurde nun erläutert, wie mit dem gezeigten Spannungswellengetriebe 20 dessen Getriebebüchse 21 in eine Rotation um die Achse A versetzt wird. Diese Rotationsbewegung wird nun erfindungsgemäß von der Getriebebüchse 21 auf das zweite Lagerteil 2 übertragen bzw. es wird das zweite Lagerteil 2 von der Getriebebüchse 21 "mitgenommen" und damit ebenfalls in eine Rotationsbewegung um die (gemeinsame) Zylinderachse A versetzt, indem die Getriebebüchse 21 in der Verlagerungsrichtung der beiden Lagerteile 1, 2 bzw. in Richtung der Zylinderachse A betrachtet gegeneinander verlagerbar aber in Umfangsrichtung bezüglich der Zylinderachse A formschlüssig mit dem die Tragfeder-Abstützung bildenden zweiten Lagerteil 2 verbunden ist. Hierfür ist der bereits kurz erläuterte Ringspalt S im zweiten Lagerteil 2 vorgesehen, in welchen die Getriebebüchse 21 abhängig von der vertikalen Position der beiden Lagerteile 1, 2 zueinander mehr oder weniger weit hineinragt. Am freien Ende der Getriebebüchse 21 sind einander diametral gegenüberliegend zwei Gleitsteine 23 starr angebracht vorgesehen, die jeweils in einer in der der Getriebebüchse 21 zugewandten Wand der auf ihrer anderen Seite die Verzahnung 52 tragenden Hülse 22 vorgesehenen Längsnut N, die parallel zur Zylinderachse A verläuft, geführt ist.

Im übrigen sei noch erwähnt, dass im ersten Lagerteil 1 in einer hierfür vorgesehenen Aufnahme 1c wie üblich das freie Ende einer Kolbenstange eines Schwingungsdämpfers gelagert sein kann, während eine weitere Aufnahme 1b für eine dem Fachmann bekannte Zusatzfeder vorgesehen sein kann, welche Zusatzfeder als Anschlagpuffer für das Gehäuse des bereits genannten Schwingungsdämpfers in dessen sollständig eingefahrenen Zustand fungiert.

## Patentansprüche

1. Stützlager für eine Tragfeder zwischen einem Aufbau eines Fahrzeugs und einem Radführungselement des Fahrzeugs mit zumindest zwei mittels eines Aktuators relativ zueinander zumindest annährend in Fahrzeug-Hochachsrichtung verlagerbaren Lagerteilen (1, 2), von denen ein erstes Lagerteil (1) am Fahrzeug-Aufbau befestigt ist und das zweite Lagerteil (2) eine Abstützung für die Tragfeder bildet,
**dadurch gekennzeichnet, dass** der Aktuator durch einen Elektromotor (10) mit nachgeschaltetem Spannungswellengetriebe (20) gebildet ist, welcher die nach Art einer Gewindespindel (5) aufeinander abgestützten Lagerteile (1, 2) relativ zueinander zu verdrehen vermag, wobei eine verformbare Getriebebüchse (21) des Spannungswellengetriebes (20) als so genannter flexspline formschlüssig und in der Verlagerungsrichtung der beiden Lagerteile (1, 2) oder der Zylinderachse (A) gegeneinander verlagerbar mit dem die Tragfeder-Abstützung bildenden zweiten Lagerteil (2) verbunden ist,
und wobei die Getriebebüchse (21) in einem außenseitig mit einem hohlzylindrischen und um eine oder die Zylinderachse (A) rotierenden Rotor (12) des Elektromotors (10) zusammenwirkenden Abschnitt (B) eine Innenverzahnung (V) aufweist, welche mit einer auf einem die gleiche Zylinderachse (A) besitzenden Kreiszylinderabschnitt (K) des fest mit dem Fahrzeug-Aufbau verbundenen ersten Lagerteils (1) vorgesehenen Außenverzahnung in Eingriff kommen kann,
und wobei der hohlzylindrische Rotor (12) des Elektromotors (10) in Achsrichtung der besagten Zylinderachse (A) betrachtet außenseitig kreiszylindrisch ist und innenseitig einen ovalen Querschnitt aufweist, auf welchem die verformbare Getriebebüchse (21) bei Rotation des Rotors (12) direkt oder unter Zwischenlage eines Gleit- oder Wälzlagers abwälzt.

2. Stützlager nach Anspruch 1, wobei das fest mit dem Fahrzeug-Aufbau verbundene erste Lagerteil (1) einen Zylinderabschnitt mit Außengewinde (51) mit in Richtung der Zylinderachse (A) weisender Gewindesteigung aufweist, mit welchem Außengewinde (51) ein auf einem Hohlzylinderabschnitt des anderen zweiten Lagerteils (2) vorgesehenes Innengewinde (52) kämmt.

3. Stützlager nach einem der vorangegangenen Ansprüche, wobei der mit dem Rotor (12) zusammenwirkende Stator (11) des Elektromotors (10) im ersten Lagerteil (1) angeordnet ist.

4. Stützlager nach einem der vorangegangenen Ansprüche, wobei der Stator (11) des Elektromotors (10) den Rotor (12) nach Art eines Hohlzylinders umgibt.

5. Stützlager nach einem der vorangegangenen Ansprüche, wobei an der Außenseite des Rotors (12) eine Magnetstruktur zur Erzeugung eines Antriebsmoments im Zusammenwirken mit dem eine geeignete Wicklung tragenden Stator (11) des Elektromotors (10) integriert ist.

6. Stützlager nach einem der vorangegangenen Ansprüche, wobei im Einbauzustand im Fahrzeug die Tragfeder an einem dritten Lagerteil (3) abgestützt ist, welches am zweiten Lagerteil (2) über ein Axiallager (4) gegenüber diesem um die gemeinsame Zylinderachse (A) des ersten und zweiten Lagerteils (1, 2) verdrehbar abgestützt ist.

7. Stützlager nach einem der vorangegangenen Ansprüche, wobei im ersten Lagerteil eine Aufnahme (1b) für ein als Anschlagpuffer fungierendes Zusatzfederelement und/oder eine Aufnahme für das freie Ende einer Kolbenstange eines Schwingungsdämpfers vorgesehen ist.

8. Stützlager nach einem der vorangegangenen Ansprüche, wobei am zweiten Lagerteil oder am dritten Lagerteil (3) eine Federunterlage (3b) für die Abstützung der Tragfeder vorgesehen ist.

## Claims

1. Support bearing for a suspension spring between a superstructure of a vehicle and a wheel-guiding element of the vehicle, having at least two bearing parts (1, 2) which by means of an actuator are displaceable relative to one another at least approximately in the direction of the vehicle vertical axis, of which a first bearing part (1) is fastened to the vehicle superstructure and the second bearing part (2) forms a support for the suspension spring,
**characterized in that**
the actuator is formed by an electric motor (10) which has a downstream stress wave gearbox (20) and is able to rotate relative to one another the bearing parts (1, 2) that are supported on top of one another in the manner of a threaded spindle (5), wherein a deformable gearbox bushing (21) of the stress wave gearbox (20) as a so-called flexspline is connected in a form-fitting manner to the second bearing part (2) that forms the suspension spring support and in a manner so as to be mutually displaceable to said second bearing part (2) in the displacement direction of the two bearing parts (1, 2) or of the cylinder axis (A), and
wherein the gearbox bushing (21) in an external portion (B) that interacts with a hollow-cylindrical rotor (12) of the electric motor (10) that rotates about a or the cylinder axis (A) has an internal toothing (V) which can engage with an external toothing that is provided on a circular-cylindrical portion (K) of the first bearing part (1) which is fixedly connected to the vehicle superstructure, and wherein the hollow-cylindrical rotor (12) of the electric motor (10), when viewed in the axial direction of said cylinder axis (A), externally is circular-cylindrical and internally has an oval cross section on which the deformable gearbox bushing (21) in the case of a rotating rotor (12) rolls directly or with the intervention of a friction bearing or rolling bearing.

2. Support bearing according to Claim 1, wherein the first bearing part (1) which is fixedly connected to the vehicle superstructure has a cylindrical portion having an external thread (51) with a thread pitch pointing in the direction of the cylinder axis (A), an internal thread (52) which is provided on a hollow-cylindrical portion of the other, second bearing part (2) meshing with said external thread (51) .

3. Support bearing according to one of the preceding claims, wherein the stator (11) of the electric motor (10) that interacts with the rotor (12) is disposed in the first bearing part (1).

4. Support bearing according to one of the preceding claims, wherein the stator (11) of the electric motor (10) surrounds the rotor (12) in the manner of a hollow cylinder.

5. Support bearing according to one of the preceding claims, wherein a magnetic structure for generating a drive torque while interacting with the stator (11) of the electric motor (10) that supports a suitable winding is integrated on the external side of the rotor (12) .

6. Support bearing according to one of the preceding claims, wherein the suspension spring in the state installed in the vehicle is supported on a third bearing part (3) which by way of an axial bearing (4) is supported on the second bearing part (2) so as to be rotatable in relation to the latter about the common cylinder axis (A) of the first bearing part (1) and the second bearing part (2).

7. Support bearing according to one of the preceding claims, wherein a receptacle (1b) for an additional spring element which functions as a stop buffer and/or a receptacle for the free end of a piston rod of a vibration damper is provided in the first bearing part.

8. Support bearing according to one of the preceding claims, wherein a spring washer (3b) for supporting the suspension spring is provided on the second bearing part or on the third bearing part (3).

## Revendications

1. Palier d'appui destiné à un ressort de suspension entre la carrosserie d'un véhicule et un élément de guidage de roue du véhicule, le palier d'appui comprenant au moins deux parties de palier (1, 2) qui peuvent être déplacées l'une par rapport à l'autre au moyen d'un actionneur au moins approximativement dans la direction verticale du véhicule, dont une première partie de palier (1) est fixée à la carrosserie du véhicule et la deuxième partie de palier (2) forme un support destiné au ressort de suspension,
**caractérisé en ce que** l'actionneur est formé par un moteur électrique (10) comprenant un engrenage à onde de déformation (20) qui est monté en aval et qui est apte à faire tourner l'une par rapport à l'autre les parties de palier (1, 2), en appui l'une sur l'autre à la manière d'une broche filetée (5), une douille déformable (21) de l'engrenage à onde de déformation (20) étant reliée à la deuxième partie de palier (2), formant le support de ressort de suspension, par complémentarité de formes sous la forme de ce que l'on appelle un flexspline et de manière déplaçable l'une par rapport à l'autre dans le sens du déplacement des deux parties de palier (1, 2) ou de l'axe de cylindre (A),
et la douille d'engrenage (21) comportant une denture intérieure (V) dans une portion (B) qui coopère du côté extérieur avec un rotor cylindrique creux (12) du moteur électrique (10) qui tourne sur un ou l'axe du cylindre (A), laquelle denture peut venir s'engrener avec une denture extérieure prévue sur une portion de cylindre circulaire (K), de même axe de cylindre (A), de la première partie de palier (1) reliée de manière fixe à la carrosserie du véhicule,
et, vu dans la direction axiale dudit axe de cylindre (A), le rotor cylindrique creux (12) du moteur électrique (10) étant en forme de cylindre circulaire du côté extérieur et ayant du côté intérieur une section transversale ovale sur laquelle la douille d'engrenage déformable (21) roule directement ou avec interposition d'un palier lisse ou à rouleaux lorsque le rotor (12) est rotation.

2. Palier d'appui selon la revendication 1, la première partie de palier (1), reliée de manière fixe à la carrosserie du véhicule, comporte une portion cylindrique pourvue d'un filetage extérieur (51) dont le pas pointe en direction de l'axe de cylindre (A), filetage extérieur (51) avec lequel s'engrène un filetage intérieur (52) prévu sur une portion de cylindre creux de l'autre deuxième partie de palier (2) .

3. Palier d'appui selon l'une des revendications précédentes, le stator (11), coopérant avec le rotor (12), du moteur électrique (10) étant disposé dans la première partie de palier (1).

4. Palier d'appui selon l'une des revendications précédentes, le stator (11) du moteur électrique (10) entourant le rotor (12) à la manière d'un cylindre creux.

5. Palier d'appui selon l'une des revendications précédentes, une structure magnétique étant intégrée au côté extérieur du rotor (12) afin de générer un couple d'entraînement en coopération avec le stator (11) du moteur électrique (10) qui porte un enroulement adapté.

6. Palier d'appui selon l'une des revendications précédentes, à l'état monté dans le véhicule, le ressort de suspension prenant appui sur une troisième partie de palier (3) qui prend appui sur la deuxième partie de palier (2) par le biais d'un palier axial (4) de manière à pouvoir tourner par rapport à celui-ci sur l'axe de cylindre commun (A) de la première et de la deuxième partie de palier (1, 2).

7. Palier d'appui selon l'une des revendications précédentes, un logement (1b) destiné à un élément à ressort supplémentaire, faisant office de butée d'arrêt, et/ou un logement destiné à l'extrémité libre d'une tige de piston d'un amortisseur de vibrations étant prévus dans la première partie de palier.

8. Palier d'appui selon l'une des revendications précédentes, un support à ressort (3b) étant prévu sur la deuxième partie de palier ou sur la troisième partie de palier (3) pour supporter le ressort de suspension.
